# EUROPEAN PATENT APPLICATION

(11) **EP 1 757 998 A1**
(43) Date of publication of application: **28.02.2007**
(21) Application number: 05739192.2
(22) Date of filing: 10.05.2005
(51) Int. Cl.: G03H 1/26, G11B 7/0065, G11B 7/125, G11B 7/135, G11B 7/16

(54) **HOLOGRAM DEVICE**

(30) Priority: 21.05.2004 JP 2004152134
(71) Applicant: ALPS ELECTRIC CO., LTD., Tokyo 145-8501 (JP)
(72) Inventor: SOMENO, Yoshihiro, 1458501 (JP)
(74) Representative: Klunker . Schmitt-Nilson . Hirsch
(86) International application number: PCT/JP2005/008528
(87) International publication number: WO 2005/114337

(57) **Abstract**

A hologram apparatus that can reproduce, with a simple configuration, information in a hologram recorded by wavelength multiplexing is provided.

In a hologram apparatus, light from a light source 10 enters a hologram 2a provided on a recording medium 2, and light exiting from the hologram 2a is received by a light receiver 3. The light emitted from the light source 10 includes light intensity peaks corresponding to a plurality of wavelengths. A variable filter 12 for switching the wavelength of light to be transmitted therethrough is provided between the light source 10 and the recording medium 2. The variable filter 12 is connected to a driver 13 that changes the characteristic of the variable filter 12 so as to transmit a light component in a wavelength band including one of the light intensity peaks, of the light emitted from the light source 10 and to switch the light peak intensity included in the wavelength band.

## Description

### Technical Field

The present invention relates to a hologram apparatus that reproduces information from a recording medium on which the information is recorded on the hologram principle, and more particularly, to a hologram apparatus that reproduces information from a recording medium on which holograms are formed by wavelength multiplexing.

### Background Art

Storage devices which two-dimensionally write and read information on and from a recording medium by using magnetism and light have widely been used in computers and the like. For example, hard disks are known as storage devices using magnetism, and CDs and DVDs are known as storage devices using light. In order to meet a demand to increase the capacity, these storage devices have made remarked progress in recording density. As a means for further increasing the capacity, a storage apparatus using the hologram principle has been developed.

A hologram storage apparatus reads and reproduces pages of information that are recorded as holograms on a recording medium. Pages of coded information are recorded on the recording medium as a pattern of changes in refractive index. This pattern is a hologram formed by interference between object light and reference light in a recording apparatus. In order to read information from the recording medium, only reference light is entered in the recording medium, and is diffracted by the pattern of the hologram, and the diffracted light is received by a photoelectric conversion element such as a CCD or a CMOS, whereby the written information can be reproduced.

One major characteristic of the hologram storage apparatus is in that information can be recorded on the recording medium by spatial multiplexing and a high recording density can be obtained. As methods of spatial multiplexing, angle multiplexing that changes the incident angle of reference light during recording and wavelength multiplexing that changes the wavelength of reference light during recording are known. In order to reproduce information from a recording medium on which the information is recorded by wavelength multiplexing, a wavelength-variable light source capable of emitting light components with a plurality of wavelengths is necessary as a light source for reference light.

A known wavelength-variable light source changes the wavelength of emitted light by thermally or mechanically changing the length of a resonator of a laser. A light wavelength-variable source is also known which changes the wavelength of emitted light by applying a current to a grating of a DFB laser. A wavelength-variable laser that mechanically changes the length of the resonator is disclosed in, for example, Patent Document 1. A wavelength-variable laser using a DFB laser is disclosed in, for example, Patent Document 2. In wavelength-variable lasers that change the length of the resonator, the length of the resonator of the laser must be changed finely and precisely. In DFB lasers, a periodic structure must be formed in the semiconductor laser, and therefore, these lasers are considerably more expensive than normal lasers.

Patent Document 1: Japanese Unexamined Patent Application Publication No. 2003-69146
Patent Document 2: Japanese Unexamined Patent Application Publication No. 5-7056

### Disclosure of Invention

### Problems to be Solved by the Invention

However, it is supposed that a hologram apparatus that only reproduces information, of hologram storage apparatuses, is installed in, for example, a PC or a small information terminal. Therefore, it is difficult to use a conventional expensive wavelength-variable laser.

Since the wavelength-variable laser that thermally changes the length of the resonator does not necessarily have high responsiveness, it is not suited to a hologram apparatus that is required to switch the wavelength at high speed. In addition, since power consumption is high because of heat generation, the laser is also not suited to the hologram apparatus in this respect.

Further, in the wavelength-variable laser that mechanically changes the length of the resonator, a quite fine motion must be performed precisely, and a minute mechanism needs to be formed in the laser. This increases the cost. Moreover, errors are easily caused by vibration.

The present invention has been made in view of the above-described problems, and an object of the invention is to provide a hologram apparatus that can reproduce, with a simple configuration, information recorded as holograms by wavelength multiplexing.

### Means for Solving the Problems

In order to overcome the above-described problems, a hologram apparatus according to the present invention enters light from a light source into a hologram provided on a recording medium, and receives light exiting from the hologram by a light receiver. The light emitted from the light source includes light intensity peaks corresponding to a plurality of wavelengths, and a variable filter for changing the wavelength of light to be transmitted therethrough is provided between the light source and the recording medium. The variable filter is connected to a driver that changes the characteristic of the variable filter so as to transmit a light component in a wavelength band including one of the light intensity peaks, of the light emitted from the light source, and to switch the light intensity peak included in the wavelength band.

In the hologram apparatus of the present invention, the variable filter is formed of a multilayer filter, and the driver changes the characteristic of the variable filter by driving the multilayer filter so as to change the incident angle of the light from the light source on the multilayer filter.

In the hologram apparatus of the present invention, the variable filter is formed of a multilayer filter, and the in-plane thickness of the multilayer filter continuously changes. The driver changes the characteristic of the variable filter by driving the multilayer filter so as to change an incident position of the light from the light source on the multilayer filter.

In the hologram apparatus of the present invention, the thickness of the multilayer filter linearly changes from one end to the other end, and the driver linearly drives the multilayer filter.

In the hologram apparatus of the present invention, the driver is connected to a controller that receives received-light intensity information from the light receiver, and the controller controls the driver according to the received-light intensity information so that the wavelength band of the light component transmitted by the variable filter includes the wavelength corresponding to the light intensity peak of the light from the light source.

In the hologram apparatus of the present invention, the variable filter is formed of a filter array in which a plurality of multilayer filters are arranged in an array. The driver changes the characteristic of the variable filter by driving the filter array so as to switch among the multilayer filters that the light from the light source enters.

In the hologram apparatus of the present invention, the filter array is substantially disc-shaped, and the multilayer filters are arranged in a circle around a center shaft. The driver rotates the center shaft of the filter array.

### Advantages of the Invention

According to the hologram apparatus of the present invention, the light emitted from the light source includes light intensity peaks corresponding to a plurality of wavelengths, and a variable filter for changing the wavelength of light to be transmitted therethrough is provided between the light source and the recording medium. The variable filter is connected to a driver that changes the characteristic of the variable filter so as to transmit a light component in a wavelength band including one of the light intensity peaks, of the light emitted from the light source, and to switch the light intensity peak included in the wavelength band. Therefore, it is possible to selectively transmit a light component corresponding to one of a plurality of peaks generated by the light source. Consequently, a combination of the light source, the variable filter, and the driver can be regarded as a wavelength-variable light source, and a hologram recorded by wavelength multiplexing can be reproduced with a simple structure. Since an inexpensive Fabry-Perot laser can be used as the light source, the hologram apparatus can be configured at low cost.

According to the hologram apparatus of the present invention, the variable filter is formed of a multilayer filter, and the driver changes the characteristic of the variable filter by driving the multilayer filter so as to change the incident angle of the light from the light source on the multilayer filter. Therefore, the characteristic of the variable filter can be changed only by changing the angle of the multilayer filter, and a wavelength-variable light source can be constructed with a simple structure.

According to the hologram apparatus of the present invention, the variable filter is formed of a multilayer filter, and the in-plane thickness of the multilayer filter continuously changes. The driver changes the characteristic of the variable filter by driving the multilayer filter so as to change an incident position of the light from the light source on the multilayer filter. Therefore, the characteristic of the variable filter can be changed only by moving the multilayer filter in parallel, and a wavelength-variable light source can be constructed with a simple structure.

According to the hologram apparatus of the present invention, the thickness of the multilayer filter linearly changes from one end to the other end, and the driver linearly drives the multilayer filter. Therefore, the characteristic of the variable filter can be changed only by driving the multilayer filter in one direction, and a wavelength-variable light source can be constructed with a simpler structure.

According to the hologram apparatus of the present invention, the driver is controlled according to received-light intensity information from the light receiver so that the wavelength band of the light to be transmitted by the variable filter includes a wavelength corresponding to the light intensity peak of the light from the light source. Therefore, it is possible to reliably ensure the intensity of received light even when the light intensity characteristic of the light source changes.

According to the hologram apparatus of the present invention, the variable filter is formed of a filter array in which a plurality of multilayer filters are arranged in an array. The driver changes the characteristic of the variable filter by driving the filter array so as to switch among the multilayer filters that the light from the light source enters. Therefore, the characteristic of the variable filter can be changed only by rotating the filter array or moving the filter array in parallel, and a wavelength-variable light source can be constructed with a simple structure.

According to the hologram apparatus according to the present invention, the filter array is substantially disc-shaped, and the multilayer filters are arranged in a circle around a center shaft. The driver rotates the center shaft of the filter array. Therefore, switching can be performed among the multilayer filters only by rotating the filter array by the driver, and a wavelength-variable light source can be constructed with a simpler structure.

### Brief Description of the Drawings

[Fig. 1] Fig. 1 is a general view of a hologram apparatus according to an embodiment.
[Fig. 2] Fig. 2 shows an emitted-light intensity distribution with respect to the wavelength of laser light.
[Fig. 3] Fig. 3 shows light intensity distributions of laser light passing through a filter.
[Fig. 4] Fig. 4 is a side view showing the interior of a light source unit according to a first embodiment.
[Fig. 5] Fig. 5 is a plan view showing the interior of the light source unit according to the first embodiment.
[Fig. 6] Fig. 6 is a side view showing the interior of a light source unit according to a second embodiment.
[Fig. 7] Fig. 7 is a side view showing the interior of a light source unit according to a third embodiment.
[Fig. 8] Fig. 8 is a front view of a filter array.

Reference Numerals
- 1: light source unit
- 2: recording medium
- 2a: hologram
- 3: light receiver
- 10: laser
- 11: collimator lens
- 12: variable filter
- 13: driver
- 14: controller
- 20: substrate
- 21: multilayer portion
- 22: tilting multilayer portion
- 23: filter array
- 24a-24d: multilayer filter
- 25: center shaft

### Best Mode for Carrying Out the Invention

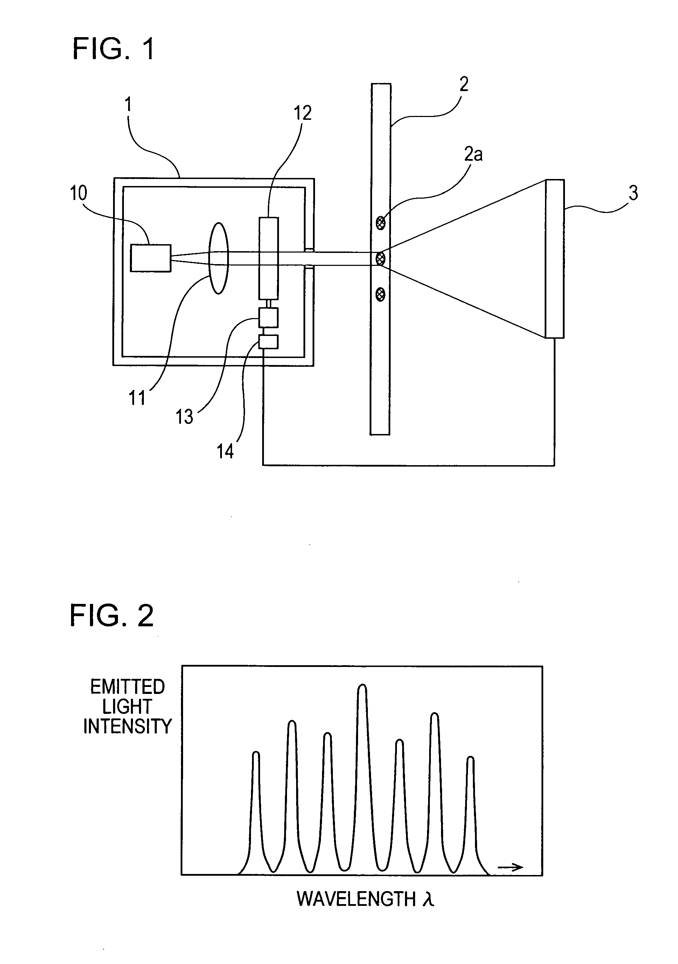

An embodiment of the present invention will be described in detail with reference to the drawings. Fig. 1 is a general view of a hologram apparatus according to the embodiment. As shown in this figure, in the hologram apparatus of this embodiment, light emitted from a light source unit 1 enters a hologram 2a on a recording medium 2, and light exiting from the hologram 2a is received by a light receiver 3, whereby information recorded in the hologram 2a is read out.

The light source unit 1 includes a laser 10 for emitting light, a collimator lens 11 for collimating the light from the laser 10, and a variable filter 12 for transmitting only a light component having a specific wavelength of the light from the collimator lens 11. The variable filter 12 is connected to a driver 13. By being driven by the driver 13, the variable filter 12 can change its characteristic so as to change the wavelength of light to be transmitted.

A plurality of holograms 2a are provided on the recording medium 2. A plurality of pieces of information are written in each of the holograms 2a by wavelength multiplexing. In order to reproduce the hologram 2a, it is necessary to enter reference light having the same angle and wavelength as those used when the information is written in the hologram 2a. In order to reproduce a hologram 2a in which a plurality of pieces of information are written by wavelength multiplexing, the multiplexed information can be sequentially reproduced by sequentially entering light components having a plurality of wavelengths used in writing into the same hologram 2a. In this embodiment, the wavelength of light to be transmitted is changed by changing the characteristic of the variable filter 12, thereby changing the wavelength of light that enters the hologram 2a.

The laser 10 used as the light source has a characteristic such that a plurality of light intensity peaks are provided corresponding to a plurality of wavelengths. Fig. 2 shows a light intensity distribution of light emitted from the laser 10 with respect to the wavelength. As shown in this figure, the laser 10 has a characteristic such that a plurality of light intensity peaks are provided in a predetermined wavelength range. The interval between the peaks is approximately 1 nm.

This characteristic is found in a widely used Fabry-Perot semiconductor laser. In an inexpensive semiconductor laser, an end face of a resonator is not necessarily an even plane, and sometimes has irregularities. Therefore, the length of the resonator varies from point to point, and the resonator emits light components having a plurality of wavelengths. As a result, the characteristic shown in Fig. 2 is found.

Only a light component having a wavelength corresponding to a predetermined peak can be extracted by passing such laser light having a plurality of light intensity peaks through a filter that transmits only a light component in a wavelength band including one of the wavelength peaks and that reflects light components having other wavelengths. Further, when the filter serves as the variable filter 12 for changing the wavelength of light to be transmitted, the light source unit 1 can be used as a wavelength-variable laser.

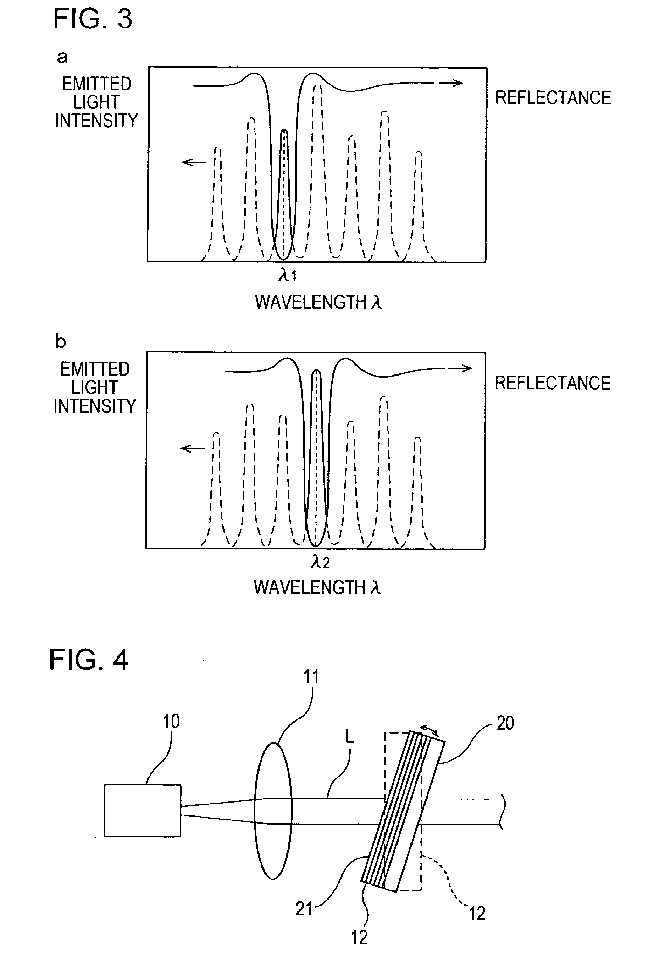

Fig. 3 shows intensity distortions of laser light passing through the filter. Fig. 3a shows a state in which light in a wavelength band including a light intensity peak at a wavelength λ₁ is extracted by the variable filter 12. Fig. 3b shows a state in which light in a wavelength band including a light intensity peak at a wavelength λ₂, which is different from the wavelength band extracted in Fig. 3a, is extracted.

As shown in Fig. 3a, the variable filter 12 has a characteristic such that the reflectance is low only in the wavelength band centered on λ₁ and is high on the other wavelength bands. That is, the variable filter 12 transmits only light in the wavelength band centered on λ₁ in which the reflectance is low, and reflects light in the other wavelength bands. When laser light having the light intensity characteristic shown in Fig. 2 enters the variable filter 12, the variable filter 12 transmits only a light component in the wavelength band including the light intensity peak at the wavelength λ₁ and its surroundings, and reflects light components in the other wavelength bands. That is, only light having the wavelength λ₁ can be extracted.

The variable filter 12 can change the characteristic of light to be transmitted, as described above. In a case in which the characteristic of the variable filter 12 is changed so that the reflectance is low only in the wavelength band centered on λ₂, as shown in Fig. 3b, when laser light having the light intensity characteristic shown in Fig. 2 enters the variable filter 12, the variable filter 12 transmits only a light component in the wavelength band including the light intensity peak at the wavelength λ₂ and its surroundings, and reflects light components in the other wavelength bands. That is, only light having the wavelength λ₂ can be extracted.

By changing the characteristic of the variable filter 12, the wavelength can be changed corresponding to the number of intensity peaks of light emitted from the laser 10. Since the hologram storage apparatus can perform multiplexing even with small changes in wavelength, even when the wavelength is changed at the interval of approximately 1 nm by the laser 10 and the variable filter 12, the wavelength change can be sufficiently used to reproduce the hologram 2a recorded by wavelength multiplexing.

The light intensity characteristic of the laser 10 shown in Fig. 2 varies, for example, with the temperature. That is, the wavelengths corresponding to the light intensity peaks are sometimes shifted slightly. In order to cope with this case, a controller 14 is connected to the driver 13 so as to control the operation of the driver 13, as shown in Fig. 1.

The controller 14 is connected to the light receiver 3, and sequentially receives information about the intensity of light received by the light receiver 3. On the basis of the information of the intensity of the received light, the controller 14 controls the driver 13 so that the intensity of light received by the light receiver 3 becomes the highest, thereby changing the characteristic of the variable filter 12. That is, through the control on the driver 13, the wavelength band in which the reflectance of the variable filter 12 is low is adjusted so as to include the light intensity peak of light emitted from the laser 10. Consequently, light having a sufficient intensity can enter the hologram 2a.

### First Embodiment

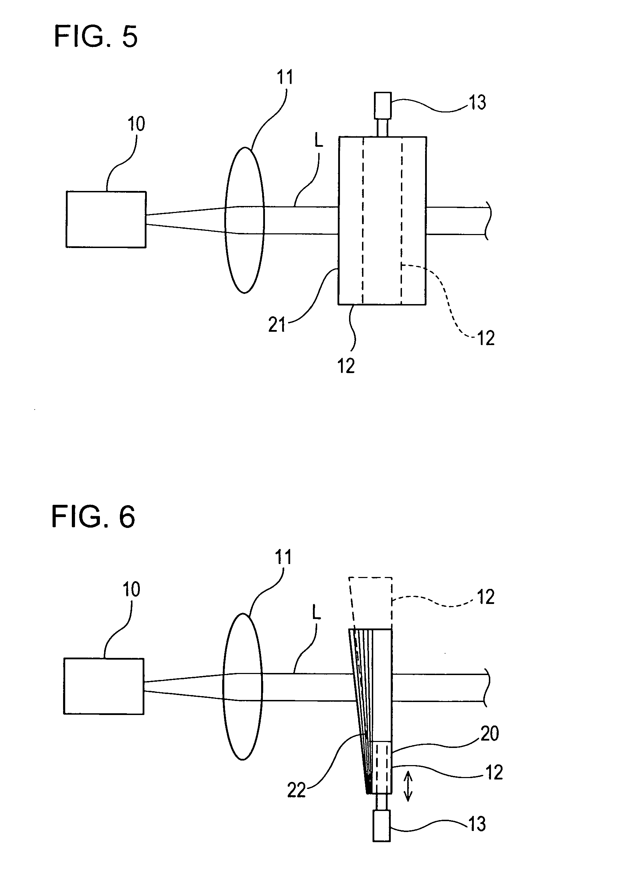

A variable filter 12 and a driver 13 according to a first embodiment will now be described in detail. Figs. 4 and 5 are a side view and a plan view, respectively, showing the interior of a light source unit 1 in this embodiment. In this embodiment, the variable filter 12 is formed of a multilayer filter. In the multilayer filter, a multilayer portion 21 in which layers having different refractive indices are alternately stacked is provided on a substrate 20. The angle with respect to incident light L can be changed by the driver 13 connected to the variable filter 12.

As shown in Fig. 5, for example, the driver 13 rotates a motor, and is connected to a side face of the variable filter 12. A surface of the variable filter 12 facing a light source 10 and a collimator lens 11 can be tilted by operating the driver 13. Since the angle of the variable filter 12 with respect to the incident light L is variable in this way, a substantial thickness of the multilayer portion 21 with respect to the incident light L can be changed.

As viewed from the incident light L, the substantial thickness of the multilayer portion 21 is larger in a case in which the multilayer portion 21 tilts relative to the incident light L, as shown by a solid line in Fig. 4, than in a case in which the multilayer portion 21 is placed orthogonal to the incident light L, as shown by a dotted line in Fig. 4. Consequently, the wavelength band of light to be transmitted also changes, and the characteristic of the variable filter 12 changes.

Accordingly, the characteristic of the variable filter 12 can be changed by changing the angle of the variable filter 12 with respect to the incident light L. By the change of the characteristic, the peak of intensity of light to be transmitted through the variable filter 12 can be switched, and the light source unit 1 can be used as a wavelength-variable light source in order to reproduce holograms 2a recorded by wavelength multiplexing.

### Second Embodiment

A variable filter 12 and a driver 13 according to a second embodiment will now be described in detail. Fig. 6 is a side view showing the interior of a light source unit 1 according to this embodiment. In this embodiment, the variable filter 12 is formed of a single multilayer filter. The multilayer filter of this embodiment is similar to that in the first embodiment in that a tilting multilayer portion 22 is provided o a substrate 20. However, the multilayer filter is different in that the in-plane thickness of the tilting multilayer portion 22 changes continuously. As shown in Fig. 6, the thickness of the tilting multilayer portion 22 linearly changes from one end to the other end. Since the thicknesses of layers that constitute the tilting multilayer portion 22 change, the total thickness of the tilting multilayer portion 22 changes.

The driver 13 connected to the variable filter 12 linearly drives the variable filter 12 so that the incident position of incident light L changes without changing the angle of the variable filter 12 with respect to the incident light L. Since the thickness of the variable filter 12 in Fig. 6 changes vertically, the driver 13 vertically drives the variable filter 12 so as to change the incident position of the incident light L on the variable filter 12. Consequently, the thickness of the tilting multilayer portion 22 changes, as viewed from the incident light L, and the wavelength band of light to be transmitted changes. That is, the characteristic of the variable filter 12 is changed by driving of the driver 13. Other structures are similar to those in the first embodiment, and the entire light source unit 1 can be used as a wavelength-variable light source to reproduce holograms 2a recorded by wavelength multiplexing.

### Third Embodiment

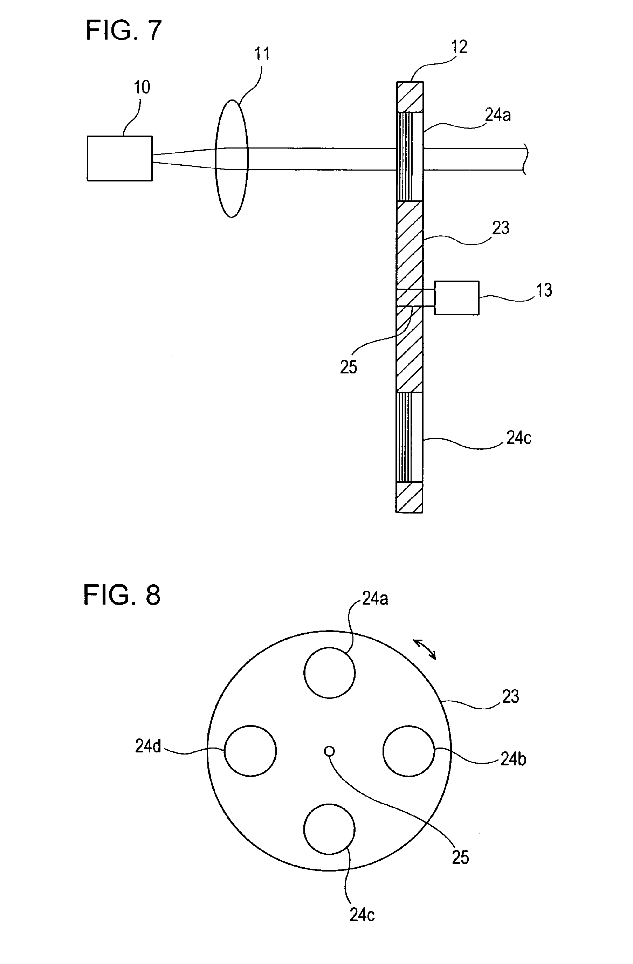

A variable filter 12 and a driver 13 according to a third embodiment will now be described in detail. Fig. 7 is a side view showing the interior of a light source unit 1 in this embodiment. In this embodiment, the variable filter 12 is formed of a filter array 23 in which a plurality of multilayer filters 24a, 24b, 24c, and 24d are arranged in an array. Fig. 8 is a front view of the filter array 23.

The filter array 23 is substantially disc-shaped. The multilayer filters 24a, 24b, 24c, and 24d are arranged in a circle centered on a center shaft 25 of the filter array 23, and have different characteristics. That is, the multilayer filters have characteristics so as to transmit light in different wavelength bands. The wavelength band of light to be transmitted includes the light intensity peak of light emitted from a laser 10, and the multilayer filters 24a, 24b, 24c, and 24d transmit only light in the corresponding wavelength bands including different peaks.

Since the filter array 23 has this structure, the light intensity peak of light to be extracted can be switched by switching among the multilayer filters on which incident light L is incident. That is, the wavelength of light to be extracted can be changed.

The driver 13 is placed on the center shaft 25 of the filter array 23 so as to switch among the multilayer filters 24a, 24b, 24c, and 24d of the filter array 23, and rotates the filter array 23. With the rotation of the filter array 23, switching is made among the multilayer filters on which the incident light L from the laser 10 is incident, and the characteristic of the variable filter 12 is changed.

While the embodiments of the present invention have been described above, the present invention is not applied only to these embodiments, and is also applicable to various applications within the technical scope of the invention. For example, while an inexpensive Fabry-Perot semiconductor laser is used as the laser 10 and a plurality of light intensity characteristics obtained because of the inconstant length of the resonator are used in this embodiment, any laser may be used as long as the laser has a characteristic having a plurality of light intensity peaks. While the present invention is applied to the hologram reproducing apparatus in this embodiment, it may be applied to a hologram recording and reproducing apparatus.

## Claims

1. A hologram apparatus that enters light from a light source into a hologram provided on a recording medium and receives light exiting from the hologram by a light receiver,
wherein the light emitted from the light source includes light intensity peaks corresponding to a plurality of wavelengths,
wherein a variable filter for changing the wavelength of light to be transmitted therethrough is provided between the light source and the recording medium, and the variable filter is connected to a driver that changes the characteristic of the variable filter so as to transmit a light component in a wavelength band including one of the light intensity peaks, of the light emitted from the light source, and to switch the light intensity peak included in the wavelength band.

2. The hologram apparatus according to claim 1, wherein the variable filter is formed of a multilayer filter, and the driver changes the characteristic of the variable filter by driving the multilayer filter so as to change the incident angle of the light from the light source on the multilayer filter.

3. The hologram apparatus according to claim 1, wherein the variable filter is formed of a multilayer filter, and the in-plane thickness of the multilayer filter continuously changes, and
wherein the driver changes the characteristic of the variable filter by driving the multilayer filter so as to change an incident position of the light from the light source on the multilayer filter.

4. The hologram apparatus according to claim 3, wherein the thickness of the multilayer filter linearly changes from one end to the other end, and the driver linearly drives the multilayer filter.

5. The hologram apparatus according to any one of claims 1 to 4, wherein the driver is connected to a controller that receives received-light intensity information from the light receiver, and
wherein the controller controls the driver according to the received-light intensity information so that the wavelength band of the light component transmitted by the variable filter includes the wavelength corresponding to the light intensity peak of the light from the light source.

6. The hologram apparatus according to claim 1, wherein the variable filter is formed of a filter array in which a plurality of multilayer filters are arranged in an array, and
wherein the driver changes the characteristic of the variable filter by driving the filter array so as to switch among the multilayer filters that the light from the light source enters.

7. The hologram apparatus according to claim 6, wherein the filter array is substantially disc-shaped, the multilayer filters are arranged in a circle around a center shaft, and the driver rotates the center shaft of the filter array.
